# EUROPEAN PATENT APPLICATION

(11) **EP 4 401 351 A1**
(43) Date of publication of application: **17.07.2024**
(21) Application number: 24150540.3
(22) Date of filing: 05.01.2024
(51) Int. Cl.: H04L 5/00, H04W 92/18, H04W 4/40

(54) **SIDELINK POSITIONING WITH DEDICATED RESOURCE POOL**

(30) Priority: 13.01.2023 US 202363479901 P
(71) Applicant: Apple Inc., Cupertino, CA 95014 (US)
(72) Inventor: YE, Chunxuan, San Diego (US); BHAMRI, Ankit, Bad Nauheim (DE); YAO, Chunhai, Beijing (CN); ZHANG, Dawei, Saratoga (US); SUN, Haitong, Cupertino (US); HE, Hong, San Jose (US); NIU, Huaning, San Jose (US); OTERI, Oghenekome, San Diego (US); FAKOORIAN, Seyed Ali Akbar, San Diego (US); ZENG, Wei, Saratoga (US)
(74) Representative: COPA Copenhagen Patents

(57) **Abstract**

A processor is provided. The processor has circuitry that executes instructions to cause a user equipment (UE) to perform operations. The operations include obtaining a message that configures a dedicated resource pool for sidelink positioning. The operations include determining a sidelink positioning resource from the dedicated resource pool. The operations include transmitting a sidelink positioning reference signal (SL-PRS) using the sidelink positioning resource. A method and a UE are also provided.

## Description

### CROSS-REFERENCE TO RELATED APPLICATIONS

This application claims priority to U.S. Provisional Patent Application No. 63/479,901, filed on January 13, 2023, the content of which is incorporated herein by reference in its entirety.

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

In some wireless communications networks, a user equipment (UE) may communicate with another UE without having the communication routed through a network node, using what is referred to as sidelink communication. A transmitting UE that initiates sidelink communication may determine the available resources (e.g., sidelink resources) from a resource pool and may select a subset of these resources to communicate with a receiving UE based on a resource allocation scheme. Existing protocols support sidelink communication using Mode 1 and Mode 2 resource allocation schemes. In Mode 1 resource allocation scheme (referred to as "Mode 1"), the resources are allocated by a network node for in-coverage UEs. In Mode 2 resource allocation scheme (referred to as "Mode 2"), the transmitting UE selects the sidelink resources.

### SUMMARY

In accordance with one aspect of the present disclosure, one or more processors have circuitry that executes instructions to cause a UE to perform operations. The operations include obtaining a message that configures a dedicated resource pool for sidelink positioning. The operations include determining a sidelink positioning resource from the dedicated resource pool. The operations include transmitting a sidelink positioning reference signal (SL-PRS) using the sidelink positioning resource.

In some implementations, the message includes one or more sidelink control information (SCI) sections in a slot, each SCI section including a plurality of SCI symbols. The message also includes one or more SL-PRS sections in the slot, each SL-PRS section including a plurality of SL-PRS symbols. The one or more SCI sections precede the one or more SL-PRS sections.

In some implementations, each SCI section includes two or three symbols.

In some implementations, obtaining the message includes at least one of: receiving the message from a base station, or accessing a memory of the UE to retrieve the message.

In some implementations, each of the one or more SCI sections is preceded by an SCI automatic gain control (AGC) symbol, and each of the one or more SL-PRS sections is preceded by an SL-PRS AGC symbol.

In some implementations, the message further includes one or more gap symbols. Each gap symbol is preceded by (i) one of the one or more SCI sections, or (ii) one of the one or more SL-PRS sections.

In some implementations, the operations further include receiving an SCI signal over a physical sidelink control channel (PSCCH), decoding the SCI signal, and measuring a reference signal received power (RSRP) of the PSCCH. Determining the sidelink positioning resource is based at least on the decoded SCI signal, the measured RSRP, and the one or more SL-PRS sections.

In some implementations, determining the sidelink positioning resource based on the measured RSRP includes determining a RSRP threshold and comparing the measured RSRP with the RSRP threshold.

In some implementations, the RSRP threshold is determined based at least on a priority of the SCI signal.

In some implementations, determining the sidelink positioning resource based on the measured RSRP further includes: determining an RSRP threshold step size; and in response to a result of comparing the measured RSRP with the RSRP threshold, adjusting the RSRP threshold by the RSRP threshold step size.

In some implementations, the operations further include determining an SCI resource based at least on the one or more SCI sections and transmitting an SCI signal using the SCI resource. The SCI signal indicates the sidelink positioning resource.

In some implementations, determining the SCI resource based at least on the one or more SCI sections includes randomly selecting the SCI resource from the one or more SCI sections. The SCI signal indicates that the UE reserves the selected SCI resource and that the LTE does not reserve other SCI resources. The SCI signal indicates that the UE reserves one or more sidelink positioning resources that are periodic, semi-persistent, or aperiodic

In some implementations, determining the SCI resource based at least on the one or more SCI sections includes: obtaining a sensing result that indicates one or more reserved SCI resources; and selecting the SCI resource from the one or more SCI sections excluding the one or more reserved SCI resources. The SCI signal indicates that the UE reserves the selected SCI resource and reserves one or more SCI resources that are periodic or aperiodic. The SCI signal indicates that the UE reserves one or more sidelink positioning resources that are periodic, semi-persistent, or aperiodic.

In some implementations, the SCI signal is a single-stage SCI signal.

In some implementations, the SCI signal further indicates at least one of: a source identifier, a destination identifier, a priority of the SCI signal, a zone identifier, one or more reserved sidelink positioning resources, or one or more reserved SCI resources.

In some implementations, the operations further include: transmitting a scheduling request for sidelink positioning to a base station; and receiving, from the base station and over a physical downlink control channel (PDCCH), a downlink control information (DCI) signal that allocates the sidelink positioning resource from the one or more SL-PRS sections.

In some implementations, the DCI signal further allocates an SCI resource from the one or more SCI sections. The operations further include transmitting an SCI signal using the SCI resource. The SCI signal indicates the sidelink positioning resource.

In some implementations, the DCI signal further indicates at least one of: a resource pool index, a time gap between (i) the PDCCH and (ii) a SL-PRS transmission or an SCI transmission, one or more SCI format fields that indicate the allocated SCI resource, one or more SL-PRS format fields that indicate the allocated sidelink positioning resource, and a configuration index.

In accordance with one aspect of the present disclosure, a UE is provided. The UE includes a transceiver, a memory configured to store instructions, and one or more processors configured to execute the instructions that cause the LTE to perform any of the operations described above.

In accordance with one aspect of the present disclosure, a method is provided. The method includes any of the operations described above.

The details of one or more implementations of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates a wireless network, according to some implementations.
FIG. 2A illustrates an example frame structure of a message that configures a dedicated resource pool for sidelink positioning, according to some implementations.
FIG. 2B illustrates another example frame structure of a message that configures a dedicated resource pool for sidelink positioning, according to some implementations.
FIG. 3 illustrates a flowchart of an example method, according to some implementations.
FIG. 4A illustrates a flowchart of an example resource selection procedure in a dedicated resource pool for sidelink positioning, according to some implementations.
FIG. 4B illustrates a flowchart of another example resource selection procedure in a dedicated resource pool for sidelink positioning, according to some implementations.
FIG. 5 illustrates a LTE, according to some implementations.
FIG. 6 illustrates an access node, according to some implementations.

### DETAILED DESCRIPTION

Sidelink communication can be used in a variety of applications, such as positioning and ranging of UEs. For example, a UE can transmit an SL-PRS to another UE using allocated sidelink positioning resources to determine the relative position between the two LTEs and/or the relative position between the transmitting UE and another object. The UE can transmit the SL-PRS using resources selected from a dedicated resource pool, e.g., a collection of candidate frequency and/or time domain sidelink resources dedicated for positioning purposes. The UE can obtain a message with information to configure (e.g., set up) the dedicated resource pool before the SL-PRS transmission. For example, a memory of the UE can be pre-programmed (e.g., at manufacturing or by a SIM card) with a message of resource pool configuration information. In this case, the UE retrieves the message from the memory to configure the resource pool. Alternatively, the UE can receive a message from a base station (e.g., a g-Node B [gNB]). In this case, the UE configures the resource pool based on the received message.

Whether the LTE obtains the configuration information from its own memory or from the base station, the information needs to be structured to effectively and efficiently indicate the dedicated resource pool for sidelink positioning. Furthermore, the UE needs to be able to determine the actual resources for SL-PRS from the dedicated resource pool. In light of these challenges, implementations of this disclosure provide example frame structures that convey the dedicated resource pool to the LTE in a compact and robust manner. Implementations of this disclosure also provide example procedures for the UE to determine SL-PRS resources and perform SL-PRS transmission accordingly. With the features of the described implementations, a UE can effectively and efficiently determine sidelink positioning resources and perform sidelink communication.

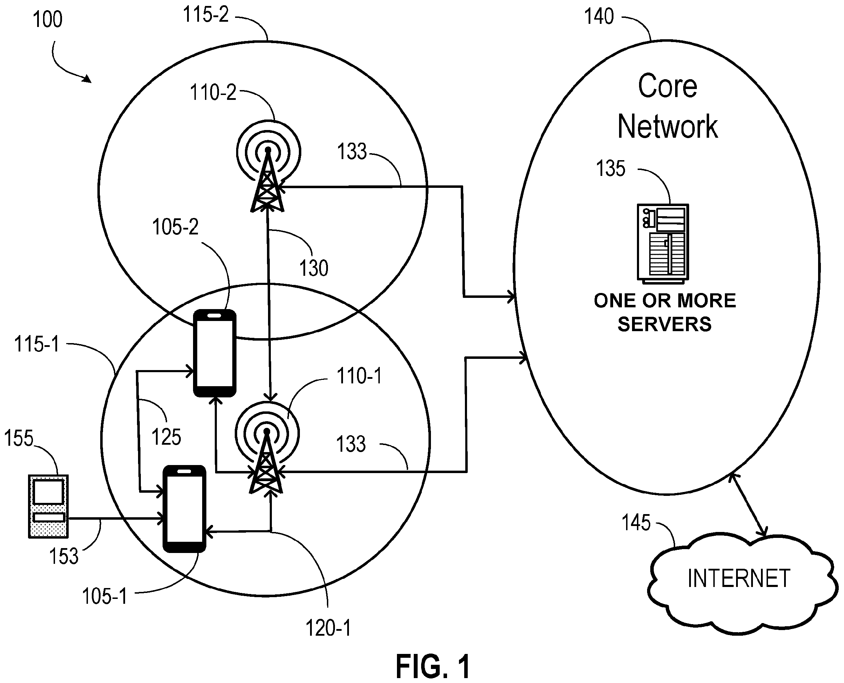

FIG. 1 illustrates an example communication system 100 that includes sidelink communications, according to some implementations. It is noted that the system of FIG. 1 is merely one example of a possible system, and that features of this disclosure may be implemented in other wireless communication systems.

The following description is provided for an example communication system that operates in conjunction with fifth generation (5G) networks as provided by 3GPP technical specifications. However, the example implementations are not limited in this regard and the described examples may apply to other networks that may benefit from the principles described herein, such as 3GPP Long Term Evolution (LTE) networks, Wi-Fi or Worldwide Interoperability for Microwave Access (WiMaX) networks, and the like. Furthermore, other types of communication standards are possible, including future 3GPP systems (e.g., Sixth Generation (6G)), IEEE 802.16 protocols (e.g., WMAN, WiMAX, etc.), or the like. While aspects may be described herein using terminology commonly associated with 5GNR, aspects of the present disclosure can be applied to other systems, such as 3G, 4G, and/or systems subsequent to 5G (e.g., 6G).

As shown, the communication system 100 includes a number of user devices. More specifically, the communication system 100 includes two LTEs 105 (LTE 105-1 and LTE 105-2 are collectively referred to as "LTE 105" or "LTEs 105"), two base stations 110 (base station 110-1 and base station 110-2 are collectively referred to as "base station 110" or "base stations 110"), two cells 115 (cell 115-1 and cell 115-2 are collectively referred to as "cell 115" or "cells 115"), and one or more servers 135 in a core network (CN) 140 that is connected to the Internet 145.

As shown, certain user devices may be able to conduct communications with one another directly, e.g., without an intermediary infrastructure device such as base station 110-1. In this example, UE 105-1 may conduct communications directly with UE 105-2. Similarly, the UE 105-2 may conduct communications directly with UE 105-1. Such peer-to-peer communications may utilize a "sidelink" interface such as a PC5 interface. In certain embodiments, the PC5 interface supports direct cellular communication between user devices (e.g., between LTEs 105), while the Uu interface supports cellular communications with infrastructure devices such as base stations. For example, the UEs 105 may use the PC5 interface for a radio resource control (RRC) signaling exchange between the UEs. The PCS/LTu interfaces are used only as an example, and PC5 as used herein may represent various other possible wireless communications technologies that allow for direct sidelink communications between user devices, while Uu in turn may represent cellular communications conducted between user devices and infrastructure devices, such as base stations.

To transmit/receive data to/from one or more base stations 110 or UEs 105, the UEs 105 may include a transmitter/receiver (or alternatively, a transceiver), memory, one or more processors, and/or other like components that enable the UEs 105 to operate in accordance with one or more wireless communications protocols and/or one or more cellular communications protocols. The LTEs 105 may have multiple antenna elements that enable the LTEs 105 to maintain multiple links 120 and/or sidelinks 125 to transmit/receive data to/from multiple base stations 110 and/or multiple UEs 105. For example, as shown in FIG. 1, UE 105-1 may connect with base station 110-1 via link 120 and simultaneously connect with UE 105-2 via sidelink 125.

The PC5 interface may alternatively be referred to as a sidelink interface and may include one or more logical channels, including but not limited to a PSCCH, a Physical Sidelink Shared Channel (PSSCH), a Physical Sidelink Discovery Channel (PSDCH), a Physical Sidelink Broadcast Channel (PSBCH), Physical Sidelink Feedback Channel (PSFCH), and/or any other like communications channels. The PSFCH carries feedback related to the successful or failed reception of a sidelink transmission. The PSSCH can be scheduled by SCI carried in the sidelink PSCCH. In some examples, the sidelink interface can operate on an unlicensed spectrum (e.g., in the unlicensed 5 Gigahertz (GHz) and 6 GHz bands) or a (licensed) shared spectrum.

In one example, the sidelink interface implements vehicle-to-everything (V2X) communications. The V2X communications may, for example, adhere to 3GPP Cellular V2X (C-V2X) specifications, or to one or more other or subsequent standards whereby vehicles and other devices and network entities may communicate. V2X communications may utilize both long-range (e.g., cellular) communications as well as short- to medium-range (e.g., non-cellular) communications. Cellular-capable V2X communications may be called Cellular V2X (C-V2X) communications. C V2X systems may use various cellular radio access technologies (RATs), such as 4G LTE or 5G NR RATs (or RATs subsequent to 5G, e.g., 6G RATs). Certain LTE standards usable in V2X systems may be called LTE-Vehicle (LTE-V) standards. As used herein in the context of V2X systems, and as defined above, the term "user devices" may refer generally to devices that are associated with mobile actors or traffic participants in the V2X system, e.g., mobile (able-to-move) communication devices such as vehicles, pedestrian user equipment (PUE) devices, and road side units (RSUs).

In some implementations, LTEs 105 may be physical hardware devices capable of running one or more applications, capable of accessing network services via one or more radio links 120 with a corresponding base station 110 (also referred to as a "serving" base station), and capable of communicating with one another via sidelink 125. Link 120 may allow the UEs 105 to transmit and receive data from the base station 110 that provides the link 120. The sidelink 125 may allow the UEs 105 to transmit and receive data from one another. The sidelink 125 between the LTEs 105 may include one or more channels for transmitting information from UE 105-1 to UE 105-2 and vice versa and/or between UEs 105 and UE-type RSUs and vice versa.

In some implementations, the UEs 105 are configured to use a resource pool for sidelink communications, such as sidelink positioning. For example, the UEs 105 can determine a sidelink positioning resource from a resource pool dedicated for sidelink positioning, and use the sidelink positioning resource to communicate reference signals such as SL-PRS. A sidelink resource pool may be divided into multiple time slots, frequency channels, and frequency sub-channels. In some examples, the LTEs 105 are synchronized and perform sidelink transmissions aligned with slot boundaries. A UE may be expected to select several slots and sub-channels for transmission of the transport block. In some examples, a UE may use different sub-channels for transmission of the transport block across multiple slots within its own resource selection window.

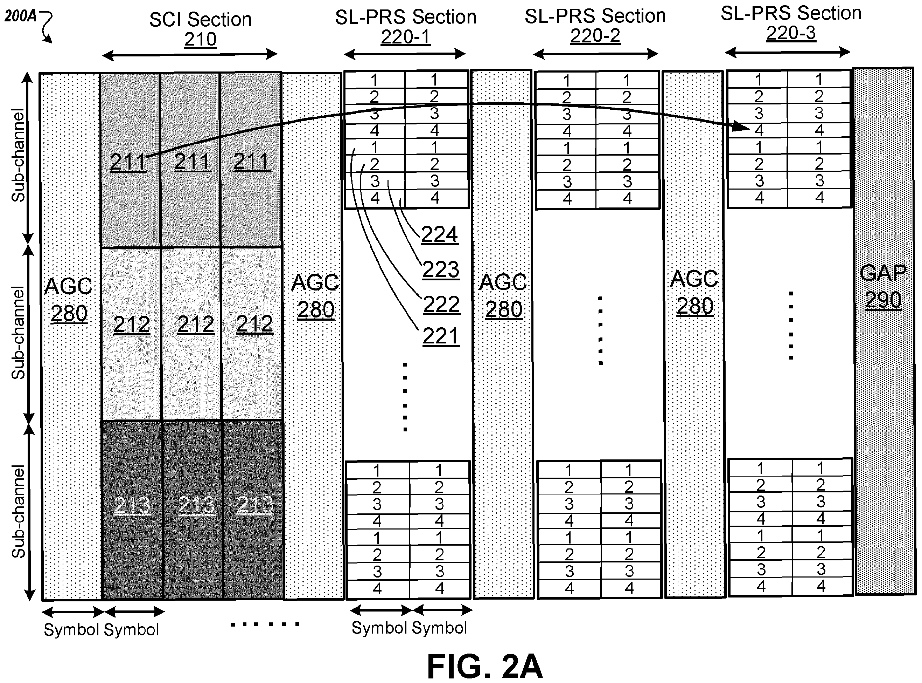

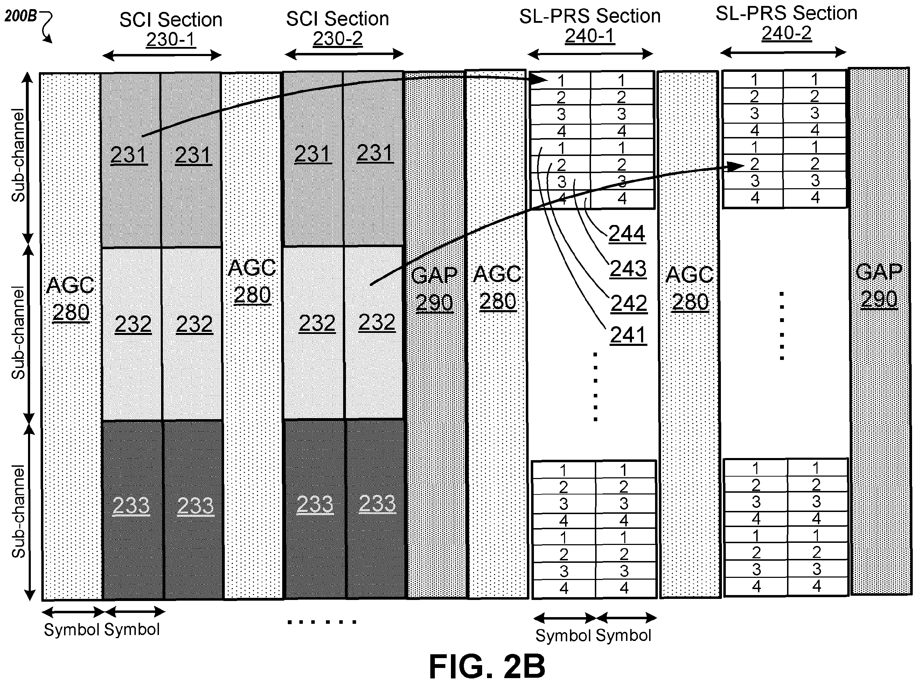

FIGs. 2A and 2B each illustrate an example frame structure, 200A and 200B, of a message that configures a dedicated resource pool for sidelink positioning, according to some implementations. The resource pool indicated by the message can span over a slot that has fourteen orthogonal frequency-division multiplexing (OFDM) symbols in the time domain, as illustrated horizontally in frame structures 200A and 200B. The resource pool can also span over a plurality of (e.g., three) sub-channels in the frequency domain, as illustrated vertically in frame structures 200A and 200B. A UE (e.g., UE 105-1 or UE 105-2 of FIG. 1) can use the time and frequency resources indicated by the message with either frame structure 200A or 200B to transmit SL-PRSs.

A message can include one or more SCI sections and one or more SL-PRS sections in a slot. An SCI section is a collection of resources dedicated for SCI signals. An SL-PRS section is a collection of resources dedicated for SL-PRSs. In sidelink communication, after a LTE determines the resources for SL-PRS transmission, the LTE can transmit an SCI signal to indicate these SL-PRS resources.

In FIG. 2A, frame structure 200A has one SCI section 210 followed by three SL-PRS sections 220-1, 220-2, and 220-3. SL-PRS sections 220-1, 220-2, and 220-3 are collectively referred to as SL-PRS sections 220. SCI section 210 has three SCI resources 211, 212, and 213. Each of SCI resources 211, 212, and 213 spans over three consecutive symbols in the time domain. Each of SCI resources 211, 212, and 213 also occupies one sub-channel in the frequency domain.

Each of SL-PRS sections 220 has four SL-PRS resources 221-224. Within SL-PRS section 220-1, all boxes with the number "1" belong to SL-PRS resource 221; all boxes with the number "2" belong to SL-PRS resource 222; all boxes with the number "3" belong to SL-PRS resource 222; and all boxes with the number "4" belong to SL-PRS resource 224. Similarly, within each of SL-PRS sections 220-2 and 220-3, all boxes with the same number belong to the same resource of the SL-PRS section. Frame structure 200A thus provides twelve SL-PRS resources in total, four from SL-PRS section 220-1, four from SL-PRS section 220-2, and four from SL-PRS section 220-3.

Each of SL-PRS resources 221-224 spans over two consecutive symbols in the time domain. SL-PRS resources 221-224 are interlaced in the frequency domain. For example, SL-PRS resource 221 occupies multiple pieces of frequency resources (illustrated as boxes with the number "1"), and these pieces are non-continuous in frequency to each other. Similarly, SL-PRS resources 222-224 each non-continuously occupy multiple pieces of frequency resources (illustrated as boxes with numbers "2," "3," and "4", respectively). The first pieces of SL-PRS resource 221-224 are adjacently arranged in order in the frequency domain, followed by the second pieces of SL-PRS resource 221-224, and so forth. The same interlaced pattern applies to SL-PRS sections 220-2 and 220-3.

Besides the symbols in SCI section 210 and SL-PRS sections 220, frame structure 200A can have one or more AGC symbols 280 to assist with the reception of the message. For example, each of SCI section 210 and SL-PRS sections 220 can be preceded by one AGC symbol 280. Additionally, frame structure 200A can have one or more gap symbols 290. For example, frame structure 200A can have a gap symbol 290 as the last (e.g., the fourteenth) symbol of the slot. In this case, gap symbol 290 is preceded by SL-PRS section 220-3.

Turning to FIG. 2B, frame structure 200B has two SCI sections 230-1 and 230-2. SCI sections 230-1 and 230-2 are collectively referred to as SCI sections 230. SCI sections 230 are followed by two SL-PRS sections 240-1 and 240-2. SL-PRS sections 240-1 and 240-2 are collectively referred to as SL-PRS sections 240.

Each of SCI section 230 has three SCI resources 231, 232, and 233, each spanning over two consecutive symbols in the time domain. Each of SCI resources 231, 232, and 233 also occupies one sub-channel in the frequency domain. Frame structure 200B thus provides six SCI resources in total, three from SCI section 230-1 and three from SCI section 230-2.

Each of SL-PRS sections 240 has four SL-PRS resources 241-244. Each of SL-PRS resources 241-244 spans over two consecutive symbols in the time domain. Similar to frame structure 200A, SL-PRS resources 241-244 in frame structure 200B are interlaced in the frequency domain in each SL-PRS section 240. Frame structure 200B thus provides eight SL-PRS resources in total, four from SL-PRS section 240-1 and four from SL-PRS section 240-2.

Frame structure 200B also has one or more AGC symbols 280. For example, each of SCI sections 230 and SL-PRS sections 240 can be preceded by one AGC symbol 280. Additionally, frame structure 200B has one or more gap symbols 290. For example, one gap symbol 290 can follow SCI sections 230, and another gap symbol 290 can follow SL-PRS sections 240.

As previously described, a UE can use an SCI signal to indicate the reserved SL-PRS resources. In the example of FIG. 2A, the LTE can use SCI resource 211 to transmit an SCI signal. In the SCI signal, the UE can indicate that it has reserved the SL-PRS resource number "4" of SL-PRS section 220-3. Likewise, in the example of FIG. 2B, the UE can use SCI resource 231 of SCI section 230-1 to transmit an SCI signal to indicate the reservation of the SL-PRS resource numbered "1" of SL-PRS section 240-1. Similarly, the UE can use SCI resource 232 of SCI section 230-2 to transmit an SCI signal to indicate the reservation of the SL-PRS resource numbered "2" of SL-PRS section 240-2.

FIGs. 2A and 2B provide only a limited number of example frame structures of dedicated resource pool for sidelink positioning. Other implementations can have frame structures with different numbers of SCI sections in a slot, different numbers of SL-PRS sections in a slot, different numbers of symbols in each section, and/or different numbers and positions of AGC and gap symbols in a slot. A UE can support multiple frame structures and can be configured, e.g., by a base station, to choose which frame structure(s) to use. The configuration can be on a per-resource-pool basis. That is, each resource pool can have its own configuration with respect to the frame structure. As such, the LTE can have great flexibility to determine the resources for SCI and SL-PRS transmissions.

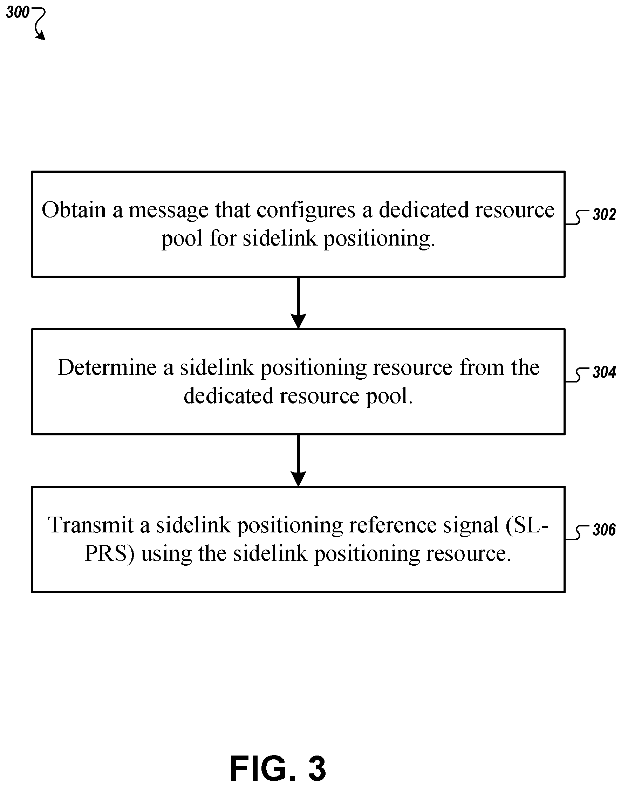

FIG. 3 illustrates a flowchart of an example method 300, according to some implementations. For clarity of presentation, the description that follows generally describes method 300 in the context of the other figures in this description. For example, method 300 can be performed by LTE 105-1 or LTE 105-2 of FIG.1. It will be understood that method 300 can be performed, for example, by any suitable system, environment, software, hardware, or a combination of systems, environments, software, and hardware, as appropriate. In some implementations, various steps of method 300 can be run in parallel, in combination, in loops, or in any order.

At 302, method 300 involves obtaining a message that configures a dedicated resource pool for sidelink positioning. As discussed previously, the message can be obtained from a memory of the UE or from a base station. The message can have a frame structure similar to frame structures 200A or 200B.

At 304, method 300 involves determining a sidelink positioning resource from the dedicated resource pool. The determination can involve a UE's resource selection from the dedicated resource pool. Alternatively or additionally, the determination can involve following a network node's (e.g. a base station's) resource allocation.

At 306, method 300 involves transmitting an SL-PRS using the sidelink positioning resource. The transmission can be accompanied by a transmission of an SCI signal that indicates the sidelink positioning resource used for SL-PRS transmission.

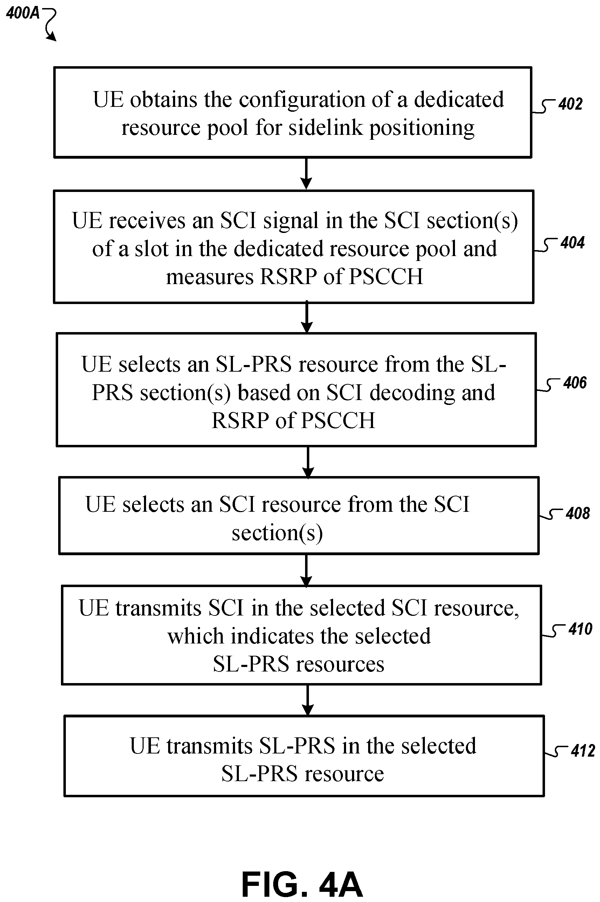

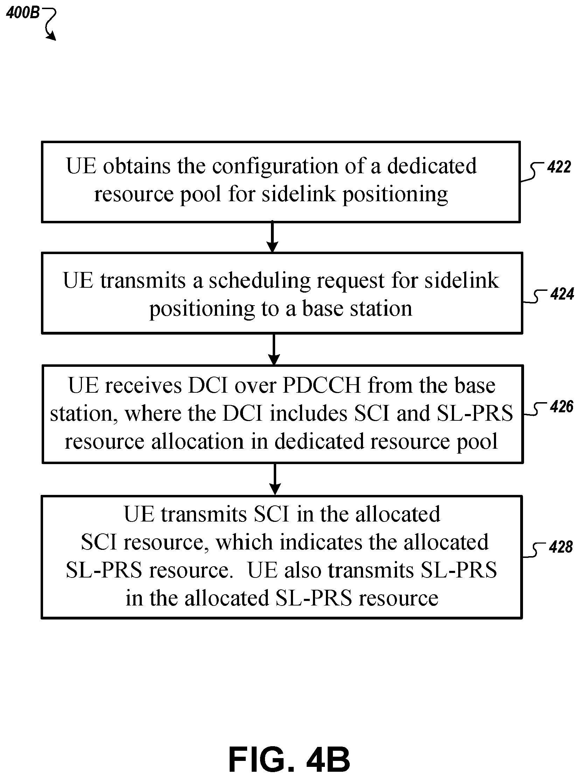

A UE can perform method 300 in a variety of ways. For example, depending on the UE's hardware and software settings and/or the nature of the communication, the UE can follow one or more resource selection procedures to determine the sidelink positioning resource at 304. Two example resource selection procedures are described below with reference to FIG. 4A and FIG. 4B. These below description assumes that the example resource selection procedures are performed by UE 105-1.

FIG. 4A illustrates a flowchart of an example resource selection procedure 400A in a dedicated resource pool for sidelink positioning, according to some implementations. Procedure 400A can apply to, e.g., the Mode 2 resource allocation scheme.

At 402, UE 105-1 obtains the configuration (e.g., a message) of a dedicated resource pool for sidelink positioning. Operation at 402 can be similar to operation at 302 of FIG. 3.

At 404, UE 105-1 receives an SCI signal from another UE, such as UE 105-2. UE 105-1 can receive the SCI signal over a physical sidelink control channel (PSCCH) using a resource within the dedicated resource pool. The received SCI signal can indicate criteria for LTE 105-1 to perform SL-PRS resource selection. For example, the received SCI signal can indicate any SL-PRS resources within the dedicated resource pool that are reserved by the other UE. Upon receiving the SCI signal, UE 105-1 measures an RSRP of the PSCCH.

At 406, UE 105-1 selects an SL-PRS resource from the SL-PRS section(s) of the frame structure, such as SL-PRS sections 220 of frame structure 200A or SL-PRS sections 240 of frame structure 200B. LTE 105-1 reserves the selected SL-PRS resource for SL-PRS transmission. UE 105-1 can make the selection based on the decoded content of the received SCI signal and the measured RSRP. For example, UE 105-1 can determine, from the decoded content of the received SCI signal, which SL-PRS resources in the dedicated resource pool are reserved by the other UE. UE 105-1 can also determine, based on the measured RSRP, whether UE 105-1 should honor the resource reservation of the other UE. If the measured RSRP is higher than a threshold, then UE 105-1 can determine that it should honor the resource reservation of the other LTE. Conversely, if the measured RSRP is lower than the threshold, then UE 105-1 can determine that the other UE is located so far away that reusing the resource reserved by the other LTE will result in little conflict. In this case, LTE 105-1 can choose not to honor the resource reservation of the other UE.

When comparing the measured RSRP with the threshold value, UE 105-1 can start with an initial RSRP threshold value. LTE 105-1 can then adjust (e.g., increase) the RSRP threshold by a small amount ("step size") to free more SL-PRS resources from the other LTE's reservation. Additionally or alternatively, the RSRP threshold value can depend on the priority of the received SCI signal.

Adjusting the RSRP threshold can determine how many resources in the dedicated resource pool are available for SL-PRS transmission. In some implementations, LTE 105-1 can set a target percentage value to describe the target ratio between the available resources and the total number of resources in a dedicated resource pool. Once the target percentage is reached, UE 105-1 stops increasing the RSRP threshold value. UE 105-1 can obtain the initial RSRP threshold value, the step size, and the target percentage value from its memory or from a base station, along with the message that configures the dedicated resource pool. The selection of SL-PRS resources based on RSRP threshold adjustment can provide a balanced approach between the number of available resources and potential conflicts with other UEs.

At 408, UE 105-1 selects an SCI resource from the SCI section(s) of the frame structure, such as SCI section 210 of frame structure 200A or SCI sections 230 of frame structure 200B. UE 105-1 will use the selected SCI resource to transmit an SCI signal (different from the SCI signal received at 404) that indicates the selected, reserved SL-PRS resource. The transmitted SCI signal can also indicate one or more SCI resources reserved by UE 105-1.

In some implementations, UE 105-1 randomly selects the SCI resource from the SCI section(s). In this case, UE 105-1 can reserve only the selected SCI resource and not any other SCI resources. Besides the selected SL-PRS resource, UE 105-1 can additionally reserve one or more SL-PRS resources that are periodic, semi-persistent, or aperiodic. LTE 105-1 can indicate the reserved SCI and SL-PRS resources in the transmitted SCI signal.

In some alternative implementations, UE 105-1 selects the SCI resource from the SCI section(s) based on sensing results. For example, LTE 105-1 can perform sensing with one or more other UEs and exclude the SCI resource(s) reserved by the other UEs according to the sensing results. In this scenario, UE 105-1 can reserve not only the selected SCI resource, but also one or more SCI resources that are periodic or aperiodic. Also, LTE 105-1 can reserve not only the selected SL-PRS resource, but also one or more SL-PRS resources that are periodic, semi-persistent, or aperiodic.

Similar to the SL-PRS resource selection at 406, the SCI resource selection at 408 can compare the measured RSRP value against the RSRP threshold. The selection of the SCI resource at 408 can also consider a target percentage value and the priority of the received SCI signal.

At 410, UE 105-1 transmits the SCI signal in the selected SCI resource. The SCI signal can be a single-stage SCI signal. The SCI signal can include one or more of the following items within its contents: a source identifier of the SCI signal; a destination identifier of the SCI signal; a priority of the SCI signal; a zone identifier; one or more SL-PRS resources (e.g., reserved SL-PRS resources); or one or more reserved SCI resources (e.g., reserved SCI resources).

In some implementations, the SL-PRS resources indicated by the SCI signal can include time resources. For example, the SCI signal can indicate that the SL-PRS resources are scheduled in the current slot or a future slot. Alternatively or additionally, the SCI signal can indicate a gap in the time domain (e.g., two or three slots) between the SCI signal and the reserved SL-PRS resources. The gap can be greater than a predefined or a resource-pool-configured minimum gap. Alternatively or additionally, the indication of the time resources can further include an SL-PRS section index, such as an index of SL-PRS section 220-1, 220-2, or 220-3 in frame structure 200A) in a slot.

In some implementations, the SL-PRS resources indicated by the SCI signal can also include frequency resources and/or a periodicity of the SL-PRSs. The indication of the frequency resources can include an SL-PRS resource index within a SL-PRS section (e.g., an index of SL-PRS resource 221, 222, 223, or 224 within SL-PRS section 220-1 in frame structure 200A). Alternatively or additionally, the periodicity of the SL-PRSs can be indicated as a number of slots or as an absolute time (e.g., in milliseconds).

In some implementations, the SCI resources indicated by the SCI signal can include time resources, frequency resources, and/or a periodicity of the SCI. The SCI signal can indicate these SCI resources similarly to the indication of the SL-PRS resources.

At 412, UE 105-1 transmits the SL-PRS signal in the selected SL-PRS resource. The transmission at 412 can be similar to the transmission at 306 of FIG. 3.

FIG. 4B illustrates a flowchart of another example resource selection procedure 400B in a dedicated resource pool for sidelink positioning, according to some implementations. Procedure 400A can apply to, e.g., the Mode 1 resource allocation scheme. In resource selection procedure 400B, operations at 422 can be similar to operations at 402 of 400A. Therefore, the description below omits 422 for brevity.

At 424, UE 105-1 transmits a scheduling request (SR) for sidelink positioning to a base station, such as base station 110-1. In the SR, UE 105-1 can request the base station to allocate resources for sidelink positioning.

At 426, UE 105-1 receives a DCI signal over a PDCCH from the base station. The DCI signal can indicate the allocated SCI (for transmitting an SCI signal) and SL-PRS (for transmitting an SL-PRS signal) resources from the dedicated resource pool for sidelink positioning. This DCI-based resource allocation mechanism can apply to dynamic SL-PRS transmissions where scheduling of SL-PRS transmission occurs for a single time after UE 105-1 connects to the network provided by the base station. This DCI-based resource allocation mechanism can also apply to type-2 configured SL-PRS transmissions where SL-PRS transmissions occurs periodically at preconfigured occasions.

The format of the DCI signal may be similar to the DCI formats used in other communications protocols or may be a different format. The DCI signal can include one or more of the following items in its contents: an index of the resource pool; a gap in the time domain between (i) the PDCCH and (ii) the SL-PRS transmission and the accompanied SCI transmission; one or more SCI format fields that indicate the allocated SCI resource; one or more SL-PRS format fields that indicate the allocated SL-PRS resource; or an index of the configuration of the dedicated resource pool. If needed, the DCI can have padding bits (e.g., 0s). The allocated SCI resource can include an SCI time resource, an SCI frequency resource, or a periodicity of the SCI. Similarly, the allocated SL-PRS resource can include an SL-PRS time resource, an SL-PRS frequency resource, or a periodicity of the SL-PRS.

At 428, UE 105-1 transmits the SCI signal in the allocated SCI resource, e.g., to LTE 105-2. UE 105-1 also transmits the SL-PRS signal in the allocated SL-PRS resource. As described previously, the SCI signal indicates the SL-PRS resource allocated for SL-PRS transmission. The transmissions at 428 can be similar to the transmissions at 306 of FIG. 3, or can be similar to the transmissions at 410-412 of FIG. 4A.

As described above, one or more implementations of this disclosure provide an effectively and efficiently approach for a UE to configure a dedicated resource pool for sidelink positioning and to determine the resources for SL-PRS transmission. The UE can efficiently configure the dedicated resource pool without significantly increasing the complexity of processing. The UE can also flexibly determine the sidelink resources for both Mode 1 and Mode 2 schemes.

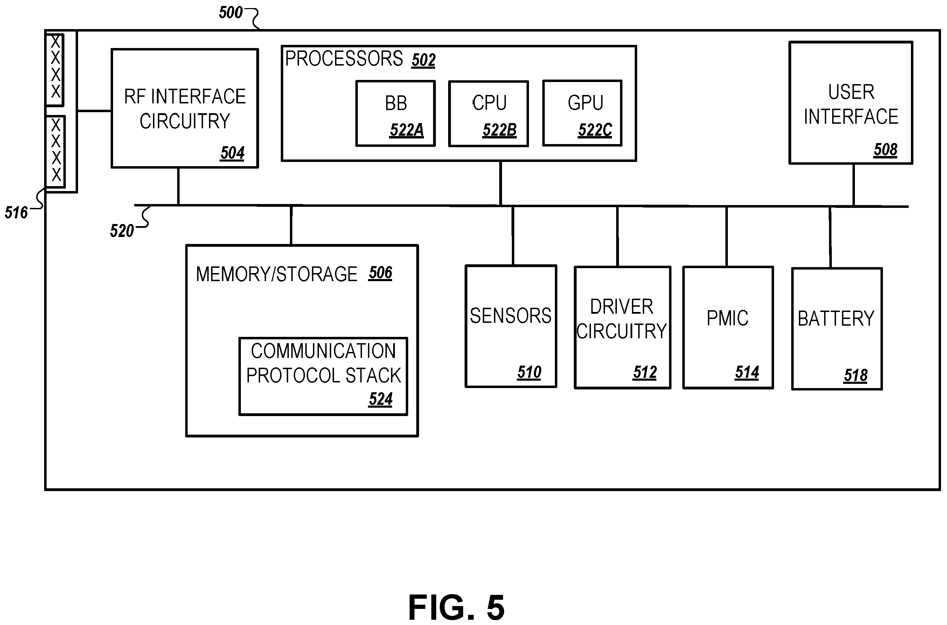

FIG. 5 illustrates a UE 500, according to some implementations. The UE 500 may be similar to and substantially interchangeable with LTE 105-1 or LTE 105-2 of FIG. 1.

The UE 500 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 500 may include processors 502, RF interface circuitry 504, memory/storage 506, user interface 508, sensors 510, driver circuitry 512, power management integrated circuit (PMIC) 514, antenna structure 516, and battery 518. The components of the UE 500 may be implemented as integrated circuits (ICs), portions thereof, discrete electronic devices, or other modules, logic, hardware, software, firmware, or a combination thereof. The block diagram of FIG. 5 is intended to show a high-level view of some of the components of the UE 500. However, some of the components shown may be omitted, additional components may be present, and different arrangement of the components shown may occur in other implementations.

The components of the UE 500 may be coupled with various other components over one or more interconnects 520, which may represent any type of interface, input/output, bus (local, system, or expansion), transmission line, trace, optical connection, etc. that allows various circuit components (on common or different chips or chipsets) to interact with one another.

The processors 502 may include processor circuitry such as, for example, baseband processor circuitry (BB) 522A, central processor unit circuitry (CPU) 522B, and graphics processor unit circuitry (GPU) 522C. The processors 502 may include any type of circuitry or processor circuitry that executes or otherwise operates computer-executable instructions, such as program code, software modules, or functional processes from memory/storage 506 to cause the UE 500 to perform operations as described herein. For example, the processors 502 can obtain the message that configures the dedicated resource pool, decode a received SCI signal or DCI signal, measure RSRP, and select SCI and SL-PRS resources.

In some implementations, the baseband processor circuitry 522A may access a communication protocol stack 524 in the memory/storage 506 to communicate over a 3GPP compatible network. In general, the baseband processor circuitry 522A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 504. The baseband processor circuitry 522A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 506 may include one or more non-transitory, computer-readable media that includes instructions (for example, communication protocol stack 524) that may be executed by one or more of the processors 502 to cause the UE 500 to perform various operations described herein. The memory/storage 506 include any type of volatile or non-volatile memory that may be distributed throughout the UE 500. In some implementations, some of the memory/storage 506 may be located on the processors 502 themselves (for example, L1 and L2 cache), while other memory/storage 506 is external to the processors 502 but accessible thereto via a memory interface. The memory/storage 506 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 504 may include transceiver circuitry and radio frequency front module (RFEM) that allows the LTE 500 to communicate with other devices over a radio access network. The RF interface circuitry 504 may include various elements arranged in transmit or receive paths. These elements may include, for example, switches, mixers, amplifiers, filters, synthesizer circuitry, control circuitry, etc. The RF interface circuitry 504 may, e.g., receive SCI or DCI signals, transmit an SR, or transmit the SL-PRS and the accompanying SCI signal.

In the receive path, the RFEM may receive a radiated signal from an air interface via antenna(s) 516 and proceed to filter and amplify (with a low-noise amplifier) the signal. The signal may be provided to a receiver of the transceiver that downconverts the RF signal into a baseband signal that is provided to the baseband processor of the processors 502.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 516. In various implementations, the RF interface circuitry 504 may be configured to transmit/receive signals in a manner compatible with NR access technologies.

The antenna(s) 516 may include one or more antenna elements to convert electrical signals into radio waves to travel through the air and to convert received radio waves into electrical signals. The antenna elements may be arranged into one or more antenna panels. The antenna(s) 516 may have antenna panels that are omnidirectional, directional, or a combination thereof to enable beamforming and multiple input, multiple output communications. The antenna(s) 516 may include microstrip antennas, printed antennas fabricated on the surface of one or more printed circuit boards, patch antennas, phased array antennas, etc. The antenna(s) 516 may have one or more panels designed for specific frequency bands including bands in FR1 or FR2.

The user interface 508 includes various input/output (I/O) devices designed to enable user interaction with the UE 500. The user interface 508 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 500.

The sensors 510 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 512 may include software and hardware elements that operate to control particular devices that are embedded in the LTE 500, attached to the LTE 500, or otherwise communicatively coupled with the UE 500. The driver circuitry 512 may include individual drivers allowing other components to interact with or control various input/output (I/O) devices that may be present within, or connected to, the UE 500. For example, driver circuitry 512 may include a display driver to control and allow access to a display device, a touchscreen driver to control and allow access to a touchscreen interface, sensor drivers to obtain sensor readings of sensors 510 and control and allow access to sensors 510, drivers to obtain actuator positions of electro-mechanic components or control and allow access to the electro-mechanic components, a camera driver to control and allow access to an embedded image capture device, audio drivers to control and allow access to one or more audio devices.

The PMIC 514 may manage power provided to various components of the UE 500. In particular, with respect to the processors 502, the PMIC 514 may control power-source selection, voltage scaling, battery charging, or DC-to-DC conversion.

In some implementations, the PMIC 514 may control, or otherwise be part of, various power saving mechanisms of the UE 500. A battery 518 may power the UE 500, although in some examples the UE 500 may be mounted deployed in a fixed location, and may have a power supply coupled to an electrical grid. The battery 518 may be a lithium ion battery, a metal-air battery, such as a zinc-air battery, an aluminum-air battery, a lithium-air battery, and the like. In some implementations, such as in vehicle-based applications, the battery 518 may be a typical lead-acid automotive battery.

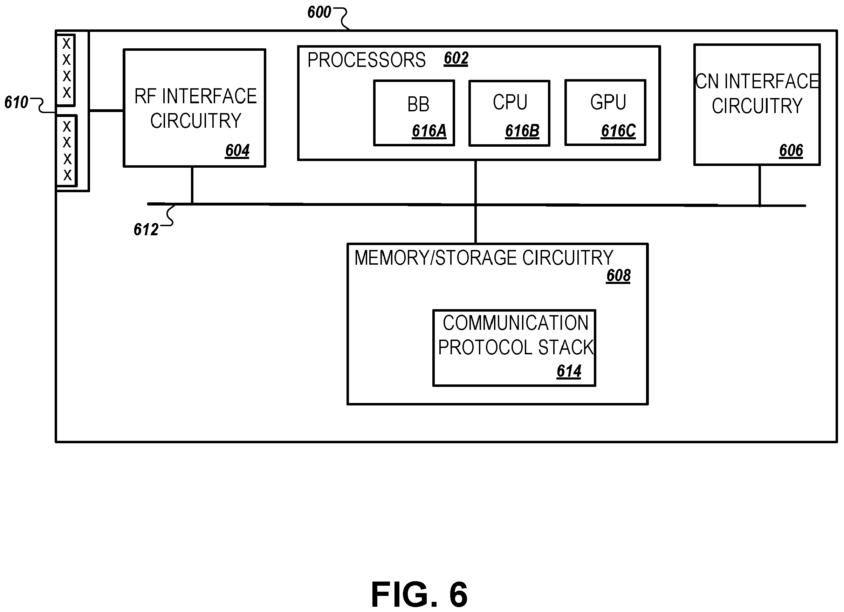

FIG. 6 illustrates an access node 600 (e.g., a base station or gNB), according to some implementations. The access node 600 may be similar to and substantially interchangeable with base station 110-1 or base station 110-2. The access node 600 may include processors 602, RF interface circuitry 604, core network (CN) interface circuitry 606, memory/storage circuitry 608, and antenna structure 610.

The components of the access node 600 may be coupled with various other components over one or more interconnects 612. The processors 602, RF interface circuitry 604, memory/storage circuitry 608 (including communication protocol stack 614), antenna(s) 610, and interconnects 612 may be similar to like-named elements shown and described with respect to FIG. 5. For example, the processors 602 may include processor circuitry such as, for example, baseband processor circuitry (BB) 616A, central processor unit circuitry (CPU) 616B, and graphics processor unit circuitry (GPU) 616C.

The CN interface circuitry 606 may provide connectivity to a core network, for example, a 5th Generation Core network (5GC) using a 5GC-compatible network interface protocol such as carrier Ethernet protocols, or some other suitable protocol. Network connectivity may be provided to/from the access node 600 via a fiber optic or wireless backhaul. The CN interface circuitry 606 may include one or more dedicated processors or FPGAs to communicate using one or more of the aforementioned protocols. In some implementations, the CN interface circuitry 606 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 600 that operates in an NR or 5G system (for example, a gNB), and the term "E-UTRAN node" or the like may refer to an access node 600 that operates in an LTE or 4G system (e.g., an eNB). According to various implementations, the access node 600 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 600 may be implemented as one or more software entities running on server computers as part of a virtual network, which may be referred to as a CRAN and/or a virtual baseband unit pool (vBBUP). In V2X scenarios, the access node 600 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more implementations, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

Any of the above-described examples may be combined with any other example (or combination of examples), unless explicitly stated otherwise. The foregoing description of one or more implementations provides illustration and description, but is not intended to be exhaustive or to limit the scope of implementations to the precise form disclosed. Modifications and variations are possible in light of the above teachings or may be acquired from practice of various implementations.

Although the implementations above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary embodiments of the present disclosure are set out in the following items and articles:

### Items

1. One or more processors comprising circuitry configured to execute instructions that cause a user equipment (UE) to perform operations comprising:
   obtaining a message that configures a dedicated resource pool for sidelink positioning;
   determining a sidelink positioning resource from the dedicated resource pool; and
   transmitting a sidelink positioning reference signal (SL-PRS) using the sidelink positioning resource.
2. The one or more processors of item 1,
   wherein the message comprises:
      one or more sidelink control information (SCI) sections in a slot, each SCI section comprising a plurality of SCI symbols; and
      one or more SL-PRS sections in the slot, each SL-PRS section comprising a plurality of SL-PRS symbols, and
   wherein the one or more SCI sections precede the one or more SL-PRS sections.
3. The one or more processors of item 2, wherein obtaining the message comprises at least one of:
   receiving the message from a base station, or
   accessing a memory of the UE to retrieve the message.
4. The one or more processors of any of items 2-3,
   wherein each of the one or more SCI sections is preceded by an SCI automatic gain control (AGC) symbol, and
   wherein each of the one or more SL-PRS sections is preceded by an SL-PRS AGC symbol.
5. The one or more processors of any of items 2-4,
   wherein the message further comprises one or more gap symbols, and
   wherein each gap symbol is preceded by (i) one of the one or more SCI sections, or (ii) one of the one or more SL-PRS sections.
6. The one or more processors of any of items 2-5, the operations further comprising:
   receiving an SCI signal over a physical sidelink control channel (PSCCH);
   decoding the SCI signal; and
   measuring a reference signal received power (RSRP) of the PSCCH,
   wherein determining the sidelink positioning resource is based at least on the decoded SCI signal, the measured RSRP, and the one or more SL-PRS sections.
7. The one or more processors of item 6, wherein determining the sidelink positioning resource based on the measured RSRP comprises:
   determining a RSRP threshold; and
   comparing the measured RSRP with the RSRP threshold.
8. The one or more processors of item 7, wherein the RSRP threshold is determined based at least on a priority of the SCI signal.
9. The one or more processors of any of items 7-8, wherein determining the sidelink positioning resource based on the measured RSRP further comprises:
   determining an RSRP threshold step size; and
   in response to a result of comparing the measured RSRP with the RSRP threshold, adjusting the RSRP threshold by the RSRP threshold step size.
10. The one or more processors of any of items 2-9, the operations further comprising:
   determining an SCI resource based at least on the one or more SCI sections; and
   transmitting an SCI signal using the SCI resource, wherein the SCI signal indicates the sidelink positioning resource.
11. The one or more processors of item 10,
   wherein determining the SCI resource based at least on the one or more SCI sections comprises: randomly selecting the SCI resource from the one or more SCI sections,
   wherein the SCI signal indicates that the UE reserves the selected SCI resource and that the UE does not reserve other SCI resources, and
   wherein the SCI signal indicates that the UE reserves one or more sidelink positioning resources that are periodic, semi-persistent, or aperiodic.
12. The one or more processors of any of items 10-11,
   wherein determining the SCI resource based at least on the one or more SCI sections comprises:
      obtaining a sensing result that indicates one or more reserved SCI resources; and
      selecting the SCI resource from the one or more SCI sections excluding the one or more reserved SCI resources,
   wherein the SCI signal indicates that the UE reserves the selected SCI resource and reserves one or more SCI resources that are periodic or aperiodic, and
   wherein the SCI signal indicates that the LTE reserves one or more sidelink positioning resources that are periodic, semi-persistent, or aperiodic.
13. The one or more processors of any of items 10-13, wherein the SCI signal is a single-stage SCI signal.
14. The one or more processors of any of items 10-13, wherein the SCI signal further indicates at least one of:
   a source identifier,
   a destination identifier,
   a priority of the SCI signal,
   a zone identifier,
   one or more reserved sidelink positioning resources, or
   one or more reserved SCI resources.
15. The one or more processors of any of items 2-14, the operations further comprising:
   transmitting a scheduling request for sidelink positioning to a base station; and
   receiving, from the base station and over a physical downlink control channel (PDCCH), a downlink control information (DCI) signal that allocates the sidelink positioning resource from the one or more SL-PRS sections.
16. The one or more processors of item 15,
   wherein the DCI signal further allocates an SCI resource from the one or more SCI sections,
   wherein the operations further comprise transmitting an SCI signal using the SCI resource, and
   wherein the SCI signal indicates the sidelink positioning resource.
17. The one or more processors of any of items 15-16, wherein the DCI signal further indicates at least one of:
   a resource pool index,
   a time gap between (i) the PDCCH and (ii) a SL-PRS transmission or an SCI transmission,
   one or more SCI format fields that indicate the allocated SCI resource,
   one or more SL-PRS format fields that indicate the allocated sidelink positioning resource, and
   a configuration index.
18. A user equipment (UE) comprising: a transceiver; a memory configured to store instructions; and one or more processors, wherein the one or more processors are configured to execute the instructions that cause the UE to perform operations comprising:
   obtaining a message that configures a dedicated resource pool for sidelink positioning;
   determining a sidelink positioning resource from the dedicated resource pool; and
   transmitting, by the transceiver, a sidelink positioning reference signal (SL-PRS) using the sidelink positioning resource.
19. A method comprising:
   obtaining a message that configures a dedicated resource pool for sidelink positioning;
   determining a sidelink positioning resource from the dedicated resource pool; and
   transmitting a sidelink positioning reference signal (SL-PRS) using the sidelink positioning resource.
20. The method of item 19,
   wherein the message comprises:
      one or more sidelink control information (SCI) sections in a slot, each SCI section comprising a plurality of SCI symbols; and
      one or more SL-PRS sections in the slot, each SL-PRS section comprising a plurality of SL-PRS symbols,
   wherein the one or more SCI sections precede the one or more SL-PRS sections, and
   wherein each SCI section comprises two or three symbols.

### Articles

1. A processor comprising circuitry that executes instructions to cause a user equipment (LTE) to perform operations comprising:
   obtaining a message that configures a dedicated resource pool for sidelink positioning;
   determining a sidelink positioning resource from the dedicated resource pool; and
   transmitting a sidelink positioning reference signal (SL-PRS) using the sidelink positioning resource.
2. The processor of article 1,
   wherein the message comprises:
      one or more sidelink control information (SCI) sections in a slot, each SCI section comprising a plurality of SCI symbols; and
      one or more SL-PRS sections in the slot, each SL-PRS section comprising a plurality of SL-PRS symbols, and
   wherein the one or more SCI sections precede the one or more SL-PRS sections.
3. The processor of article 2, wherein each SCI section comprises two or three symbols.
4. The processor of any of articles 2-3, wherein obtaining the message comprises at least one of:
   receiving the message from a base station, or
   accessing a memory of the UE to retrieve the message.
5. The processor of any of articles 2-4,
   wherein each of the one or more SCI sections is preceded by an SCI automatic gain control (AGC) symbol, and
   wherein each of the one or more SL-PRS sections is preceded by an SL-PRS AGC symbol.
6. The processor of any of articles 2-5,
   wherein the message further comprises one or more gap symbols, and
   wherein each gap symbol is preceded by (i) one of the one or more SCI sections, or (ii) one of the one or more SL-PRS sections.
7. The processor of any of articles 2-6, the operations further comprising:
   receiving an SCI signal over a physical sidelink control channel (PSCCH);
   decoding the SCI signal; and
   measuring a reference signal received power (RSRP) of the PSCCH,
   wherein determining the sidelink positioning resource is based at least on the decoded SCI signal, the measured RSRP, and the one or more SL-PRS sections.
8. The processor of article 7, wherein determining the sidelink positioning resource based on the measured RSRP comprises:
   determining a RSRP threshold; and
   comparing the measured RSRP with the RSRP threshold.
9. The processor of article 8, wherein the RSRP threshold is determined based at least on a priority of the SCI signal.
10. The processor of any of articles 8-9, wherein determining the sidelink positioning resource based on the measured RSRP further comprises:
   determining an RSRP threshold step size; and
   in response to a result of comparing the measured RSRP with the RSRP threshold, adjusting the RSRP threshold by the RSRP threshold step size.
11. The processor of any of articles 2-10, the operations further comprising:
   determining an SCI resource based at least on the one or more SCI sections; and
   transmitting an SCI signal using the SCI resource, wherein the SCI signal indicates the sidelink positioning resource.
12. The processor of article 11,
   wherein determining the SCI resource based at least on the one or more SCI sections comprises: randomly selecting the SCI resource from the one or more SCI sections,
   wherein the SCI signal indicates that the UE reserves the selected SCI resource and that the UE does not reserve other SCI resources, and
   wherein the SCI signal indicates that the LTE reserves one or more sidelink positioning resources that are periodic, semi-persistent, or aperiodic.
13. The processor of any of articles 11-12,
   wherein determining the SCI resource based at least on the one or more SCI sections comprises:
      obtaining a sensing result that indicates one or more reserved SCI resources; and
      selecting the SCI resource from the one or more SCI sections excluding the one or more reserved SCI resources,
   wherein the SCI signal indicates that the UE reserves the selected SCI resource and reserves one or more SCI resources that are periodic or aperiodic, and
   wherein the SCI signal indicates that the UE reserves one or more sidelink positioning resources that are periodic, semi-persistent, or aperiodic.
14. The processor of any of articles 11-13, wherein the SCI signal is a single-stage SCI signal.
15. The processor of any of articles 11-14, wherein the SCI signal further indicates at least one of:
   a source identifier,
   a destination identifier,
   a priority of the SCI signal,
   a zone identifier,
   one or more reserved sidelink positioning resources, or
   one or more reserved SCI resources.
16. The processor of any of articles 2-15, the operations further comprising:
   transmitting a scheduling request for sidelink positioning to a base station; and
   receiving, from the base station and over a physical downlink control channel (PDCCH), a downlink control information (DCI) signal that allocates the sidelink positioning resource from the one or more SL-PRS sections.
17. The processor of article 16,
   wherein the DCI signal further allocates an SCI resource from the one or more SCI sections,
   wherein the operations further comprise transmitting an SCI signal using the SCI resource, and
   wherein the SCI signal indicates the sidelink positioning resource.
18. The processor of any of articles 16-17, wherein the DCI signal further indicates at least one of:
   a resource pool index,
   a time gap between (i) the PDCCH and (ii) a SL-PRS transmission or an SCI transmission,
   one or more SCI format fields that indicate the allocated SCI resource,
   one or more SL-PRS format fields that indicate the allocated sidelink positioning resource, and
   a configuration index.
19. A user equipment (UE) comprising one or more processors configured to perform the operations of any of articles 1 to 18.
20. A method comprising the operations of any of articles 1 to 18.

## Claims

1. One or more processors comprising circuitry configured to execute instructions that cause a user equipment (UE) to perform operations comprising:
obtaining a message that configures a dedicated resource pool for sidelink positioning;
determining a sidelink positioning resource from the dedicated resource pool; and
transmitting a sidelink positioning reference signal (SL-PRS) using the sidelink positioning resource.

2. The one or more processors of claim 1,
wherein the message comprises:
one or more sidelink control information (SCI) sections in a slot, each SCI section comprising a plurality of SCI symbols; and
one or more SL-PRS sections in the slot, each SL-PRS section comprising a plurality of SL-PRS symbols, and
wherein the one or more SCI sections precede the one or more SL-PRS sections, and
wherein each SCI section comprises two or three symbols.

3. The one or more processors of claim 2, wherein obtaining the message comprises at least one of:
receiving the message from a base station, or
accessing a memory of the UE to retrieve the message.

4. The one or more processors of claim 2 or 3,
wherein each of the one or more SCI sections is preceded by an SCI automatic gain control (AGC) symbol, and
wherein each of the one or more SL-PRS sections is preceded by an SL-PRS AGC symbol.

5. The one or more processors of any of claims 2 to 4,
wherein the message further comprises one or more gap symbols, and
wherein each gap symbol is preceded by (i) one of the one or more SCI sections, or (ii) one of the one or more SL-PRS sections.

6. The one or more processors of any of claims 2 to 5, the operations further comprising:
receiving an SCI signal over a physical sidelink control channel (PSCCH);
decoding the SCI signal; and
measuring a reference signal received power (RSRP) of the PSCCH,
wherein determining the sidelink positioning resource is based at least on the decoded SCI signal, the measured RSRP, and the one or more SL-PRS sections.

7. The one or more processors of claim 6,
wherein determining the sidelink positioning resource based on the measured RSRP comprises:
determining a RSRP threshold;
comparing the measured RSRP with the RSRP threshold, wherein the RSRP threshold is determined based at least on a priority of the SCI signal;
determining an RSRP threshold step size; and
in response to a result of comparing the measured RSRP with the RSRP threshold, adjusting the RSRP threshold by the RSRP threshold step size.

8. The one or more processors of any of claims 2 to 7, the operations further comprising:
determining an SCI resource based at least on the one or more SCI sections; and
transmitting an SCI signal using the SCI resource, wherein the SCI signal indicates the sidelink positioning resource.

9. The one or more processors of claim 8,
wherein determining the SCI resource based at least on the one or more SCI sections comprises: randomly selecting the SCI resource from the one or more SCI sections,
wherein the SCI signal indicates that the UE reserves the selected SCI resource and that the UE does not reserve other SCI resources, and
wherein the SCI signal indicates that the UE reserves one or more sidelink positioning resources that are periodic, semi-persistent, or aperiodic.

10. The one or more processors of claim 8,
wherein determining the SCI resource based at least on the one or more SCI sections comprises:
obtaining a sensing result that indicates one or more reserved SCI resources; and
selecting the SCI resource from the one or more SCI sections excluding the one or more reserved SCI resources,
wherein the SCI signal indicates that the UE reserves the selected SCI resource and reserves one or more SCI resources that are periodic or aperiodic, and
wherein the SCI signal indicates that the UE reserves one or more sidelink positioning resources that are periodic, semi-persistent, or aperiodic.

11. The one or more processors of any of claims 8 to 10, wherein the SCI signal is a single-stage SCI signal, and wherein the SCI signal further indicates at least one of:
a source identifier,
a destination identifier,
a priority of the SCI signal,
a zone identifier,
one or more reserved sidelink positioning resources, or
one or more reserved SCI resources.

12. The one or more processors of any of claims 2 to 11, the operations further comprising:
transmitting a scheduling request for sidelink positioning to a base station; and
receiving, from the base station and over a physical downlink control channel (PDCCH), a downlink control information (DCI) signal that allocates the sidelink positioning resource from the one or more SL-PRS sections,
wherein the DCI signal further allocates an SCI resource from the one or more SCI sections,
wherein the operations further comprise transmitting an SCI signal using the SCI resource, and
wherein the SCI signal indicates the sidelink positioning resource.

13. The one or more processors of claim 12, wherein the DCI signal further indicates at least one of:
a resource pool index,
a time gap between (i) the PDCCH and (ii) a SL-PRS transmission or an SCI transmission,
one or more SCI format fields that indicate the allocated SCI resource,
one or more SL-PRS format fields that indicate the allocated sidelink positioning resource, and
a configuration index.

14. A user equipment (LTE) comprising the one or more processors of any of claims 1 to 13.

15. A method comprising:
obtaining a message that configures a dedicated resource pool for sidelink positioning;
determining a sidelink positioning resource from the dedicated resource pool; and
transmitting a sidelink positioning reference signal (SL-PRS) using the sidelink positioning resource.
